# EUROPEAN PATENT APPLICATION

(11) **EP 3 075 634 A1**
(43) Date of publication of application: **05.10.2016**
(21) Application number: 16157494.2
(22) Date of filing: 26.02.2016
(51) Int. Cl.: B62D 1/19, B62D 1/184

(54) **STEERING COLUMN DEVICE**

(30) Priority: 30.03.2015 JP 2015068021
(71) Applicant: FUJI KIKO Co., Ltd., Kosai-shi, Shizuoka 431-0431 (JP)
(72) Inventor: UESAKA, Yota, Kosai-shi, Shizuoka 431-0431 (JP); ADACHI, Takuya, Kosai-shi, Shizuoka 431-0431 (JP)
(74) Representative: Grünecker Patent- und Rechtsanwälte PartG mbB

(57) **Abstract**

When a load exceeding a set value is applied to an inner column (4), rack teeth (54a) moves together with the inner column (4), forward in its cylinder-axis direction. Consequently, a pinion (55) engaging with the rack teeth (54a) rotates about an eccentric cam member (43). The impact energy is absorbed since each winding part (61) rotating together with the pinion (55) winds an impact absorbing member (62).

## Description

### Technical Field

The present disclosure relates to a steering column device that allows a column to contract together with a steering shaft due to an impact load at a secondary collision of an impact accident, thereby absorbing the impact energy.

### Background Art

As shown in Fig. 1, a steering column device 101 of WO2012/000593A1 includes an outer column 103 fixed to the side of a vehicle body. Into this outer column 103, a cylinder-shaped inner column 104 is inserted so as to be movable in the longitudinal direction of a vehicle. A fastening mechanism 105 is provided to fasten this inner column 104 to the outer column 103. An impact absorbing mechanism 106 is provided to absorb the impact energy when an impact accident causes a secondary collision where a passenger collides with a steering wheel.

The fastening mechanism 105 includes a pair of clamp parts 132 which stand from the outer column 103 so as to interpose the inner column 104 therebetween. An operating shaft 151 penetrates through the pair of clamp parts 132. The inner plate 104 is provided with a lock plate 161 extending along the direction of a cylinder-axis. The lock plate 161 is in the form of a ladder where multiple lock holes 161 are formed in a belt-shaped member successively in the longitudinal direction. A lock claw 162 is arranged on the operating shaft 151. By rotationally operating the operating shaft 105 about its axis, the lock claw 162 is detachably engaged with the lock holes 161a. The lock plate 161 is retained in an arbitrary position since the lock claw 162 is engaged with a bar 163 dividing the adjoining lock holes 161a.

When the inner column 104 moves forward due to a collision with a passenger, the impact absorbing mechanism 106 absorbs the impact energy since an energy absorbing member arranged between the inner column 104 and the lock plate 161 retained in the arbitrary position is bent as if it were drawn.

Additionally, in a steering column device of WO2009/121386A1, as shown in Fig. 2, an impact absorbing mechanism 206 is constructed so as to absorbing the impact energy by tearing a lock plate 254 when an inner column is moved forward by a collision with a passenger.

### Summary of the Invention

In common with the impact absorbing mechanisms mentioned above, meanwhile, there is a problem that the whole device is large-sized because it is necessary to secure a large space for installing and deflecting the lock plate 154 or tearing the lock plate 254.

In consideration of the above-mentioned situation, therefore, an object of the present invention is to provide a steering column device capable of absorbing the impact energy without upsizing the whole device.

According to a first aspect of the present invention, there is provided a steering column device comprising: an outer column (3) having a cylindrical shape and arranged along a vehicle longitudinal direction; a slit (31) formed to penetrate through a cylindrical wall of the outer column (3) along a cylinder-axis direction of the outer column (3); a pair of clamp parts (32) arranged on both edge parts of the slit (31) along the cylinder-axis direction; an inner column (4) having a cylindrical shape and inserted into the outer column (3) so as to be movable in a cylinder-axis direction of the inner column (4); an operating shaft (51) having a shaft-shape and arranged so as to penetrate through the pair of clamp parts (32); a lock mechanism (5) configured to narrow a distance between the pair of clamp parts (32) by rotating an operating lever (51a) arranged on the operating shaft (51) about an axis of the operating shaft (51) in a fastening direction, thereby fastening the inner column (4) to the outer column (3); an engagement mechanism (5b) including: an eccentric cam member (53) arranged on the operating shaft so as to rotatable about the axis together with the operating shaft, the eccentric cam member provided, on its outer circumferential face, with an eccentric cam (53a); a pinion (55) arranged on the outer circumference of the eccentric cam (53a) so as to be rotatable about the eccentric cam member (53) as an axis of rotation; and rack teeth (54a) formed on the outer circumferential face of the inner column (4) along the cylinder-axis direction, the rack teeth (54a) continuing in the cylinder-axis direction so as to engage with the pinion (55), wherein the engagement mechanism (5b) is configured so that the rotating of the operating shaft (51) in the fastening direction allows the eccentric cam (53a) to engage the pinion (55) with the rack teeth (54a) under pressure; and an impact absorbing mechanism (6) including: a winding part (61) arranged on each side of the pinion (55) and rotatably supported by the operating shaft (51) so as to be rotatable integrally with the pinion (55); and an impact absorbing member (62) having a wire material, the impact absorbing member (62) having one end fixed to the winding part (61) and the other end routed along the inner column (4) while being wound around the winding part (61), wherein the impact absorbing mechanism (6) is configured so that, when a load exceeding a set value is applied to the inner column (4) in the cylinder-axis direction, the rack teeth (54a) moves forward in the cylinder-axis direction together with the inner column (4) to cause the pinion (55) in engagement with the rack teeth (54a) to rotate about the eccentric cam member (53) and also cause the winding part (61) to wind the impact absorbing member (62), thereby absorbing impact energy.

In the steering column device described above, one of the outer column (3) and the inner column (4) may be provided with a telescopic slot (34) extending along the cylinder-axis direction while penetrating through a cylindrical wall of the column (3 or 4), and the other of the outer column (3) and the inner column (4) may be provided with a stopper (41) which is inserted and fitted to the telescopic slot (34) movably in a longitudinal direction of the telescopic slot (34) and which is established so as to be fractured when a shear load exceeding a set value is applied to the stopper (41).

By adopting a wire material as the impact absorbing member and constructing the steering column device so that the impact absorbing member is wound by the pinion in absorbing the impact energy, it is possible to make the impact absorbing mechanism smaller. As a result, the impact energy can be absorbed without enlarging the whole device.

Additionally, in case of providing the telescopic slot and the stopper, it is possible to perform not only the positional adjustment of the inner column within the telescopic-position adjustment range in normal time but also the absorption of impact energy by a breakage of the stopper at the time of absorbing an impact.

### Brief Description of the Drawings

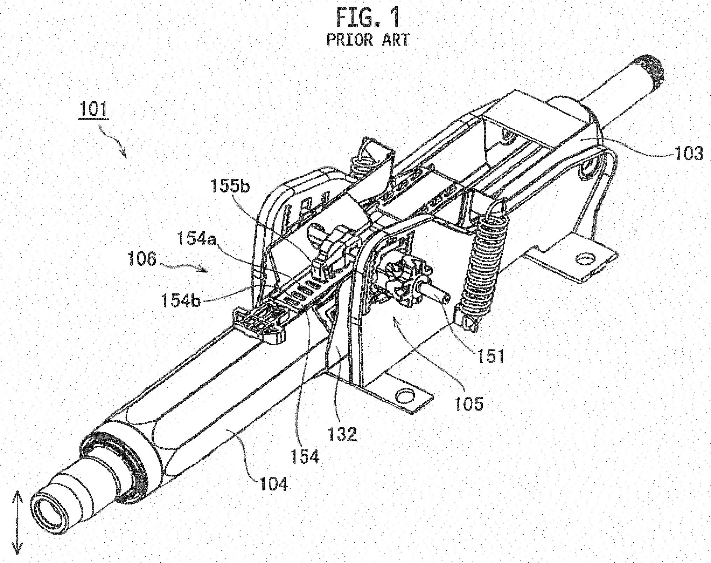

Fig. 1 is a perspective view showing a steering column device in a conventional art.

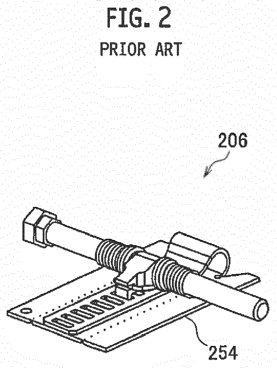

Fig. 2 is a perspective view showing an impact absorbing mechanism in a conventional art.
Fig. 3 is a perspective view showing one embodiment of the present invention.
Fig. 4 is a left side view showing the one embodiment of the present invention.
Fig. 5 is a plan view showing the one embodiment of the present invention.
Fig. 6 is a bottom view showing the one embodiment of the present invention.
Fig. 7 is a sectional view taken along a line VII-VII of Fig. 4.
Fig. 8 is an exploded perspective view showing the constitution of an impact absorbing mechanism of this embodiment.

### Description of the Embodiments

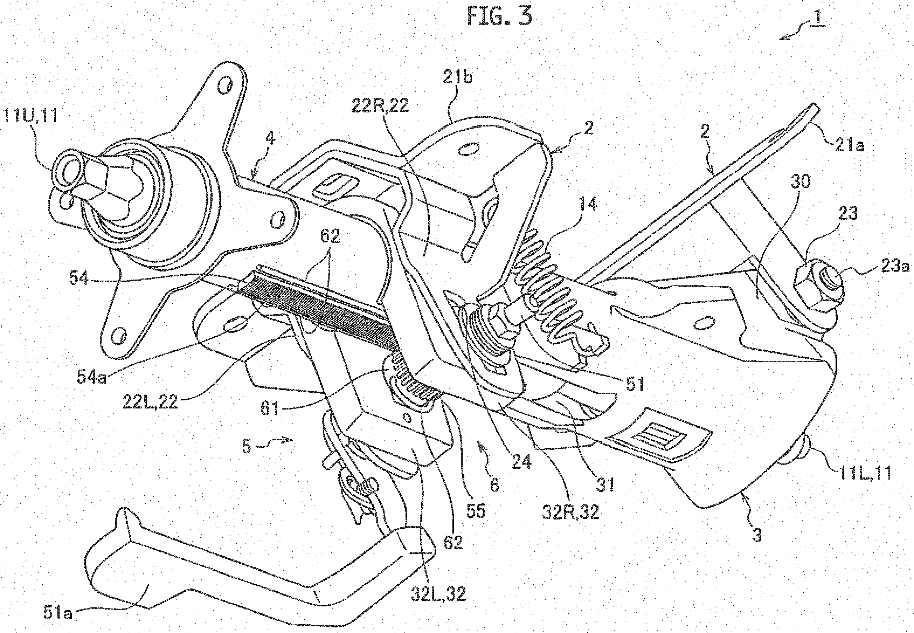

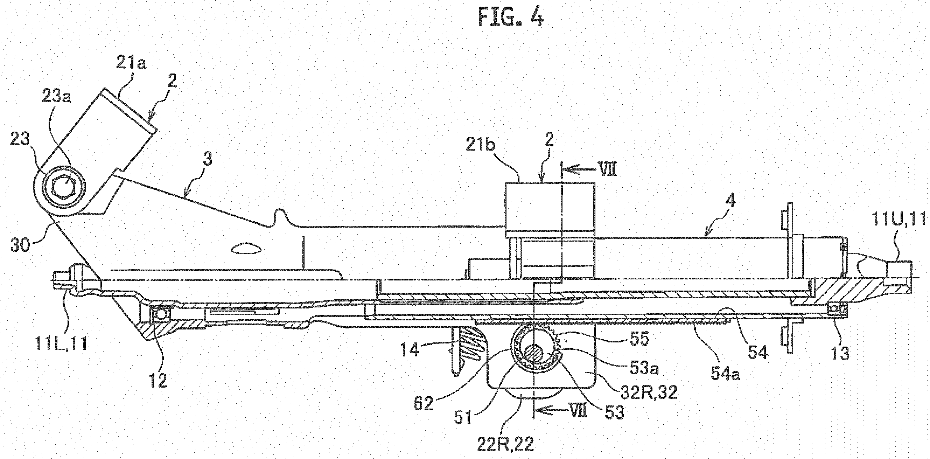

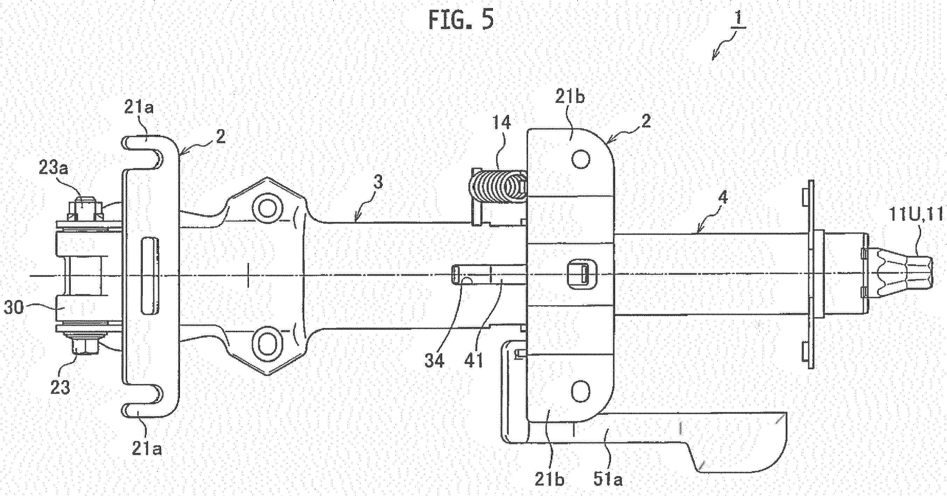

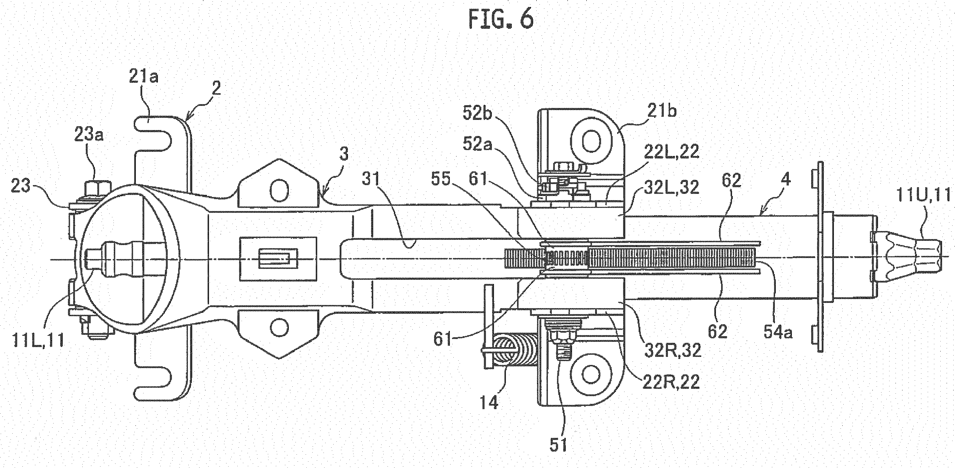

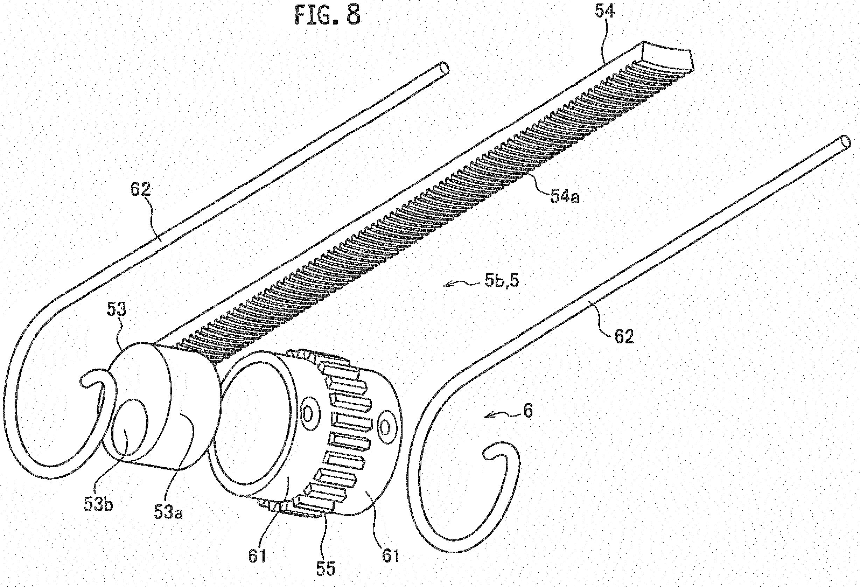

One embodiment of the present invention will be described with reference to the drawings, below. As shown in Figs. 3 to 8, this embodiment relates to a manual type steering column device 1. The steering column device 1 of this embodiment includes an attachment bracket 2 for fixing the device 1 to a vehicle body. An outer column 3 is supported relative to this attachment bracket 2 so as to be pivotable (capable of adjusting its tilt position) in a vehicle vertical direction. An inner column 4 is supported relative to the outer column 3 so as to be movable (capable of adjusting its telescopic position) in a vehicle longitudinal direction. The steering column device 1 is provided with a lock mechanism 5 which fastens the attachment bracket 2, the outer column 3 and the inner column 4 to each other integrally. The steering column device 1 further includes an impact absorbing mechanism 6 for absorbing impact energy applied to the inner column 4.

The attachment bracket 2 includes a front-side fixing part 21 a fixed to a ceiling plane (not shown) of a vehicle body and a rear-side fixing part 21b. The front-side fixing part 21a includes a pivot part 23 which journals the outer column 3 swingably. The rear-side fixing part 21b includes a pair of hanging parts 22 hanging from left and right marginal parts 21. Both of the hanging parts 22 have tilt slots 24 opened to define the tilt-position adjustment range along the vehicle vertical direction (tilting direction). The tilt slots 24 are composed of arcuate slots centered on the pivot part 23.

The outer column 3 has a cylindrical shape and is arranged between the pair of hanging parts 22 to extend along the vehicle longitudinal direction. The outer column 3 is provided, at its upper marginal portion on the front-end side, with a pivot receiving part 30. Since the pivot receiving part 30 is pivotally supported by the pivot part 23 of the attachment bracket 2 through a bolt 23a, the rear-end side of the outer column 3 swings in the vehicle vertical direction.

Additionally, the outer column 3 is provided with a slit 31 which penetrates through the lower face of a cylinder wall 3a and extends from a rear edge of the outer column 3 along a cylinder-axis direction. The dimension of the slit 31 in the cylinder-axis direction is established so that the slit 31 extends from the outer column's rear edge up to an outer column's part corresponding to the front end of the inner column 4 under condition that the inner column 4 inserted into the outer column 3 through its rear end is shrunk to the utmost extent after absorbing impact energy.

Further, a pair of clamp parts 32 are formed so as to stand on both marginal parts of the slit 31 along the cylinder-axis direction. Both clamp parts 32 are positioned on the rear-end side of the slit 31 and formed to stand on outer-column's portions opposed to the hanging parts 22 along the vehicle vertical direction. Additionally, an operating shaft 51 penetrates through both clamp parts 32 rotatably around an axis of the shaft.

Additionally, the outer column 3 is provided, in its ceiling portion, with a telescopic slot 34 which penetrates through the cylinder wall 3a and extends along the cylinder-axis direction.

The inner column 4, which has a cylindrical shape, is inserted into the cylindrical outer column 3 so as to be movable in the outer column 3 in the cylinder-axis direction. Incidentally, a steering shaft 11 is rotatably supported in respective cylinders of the cylindrical inner column 4 and the cylindrical outer column 3. The steering shaft 11 comprises a lower shaft 11L rotatably supported in the outer column 3 and an upper shaft 11U rotatably supported in the inner column 4. Since the upper shaft 11U and the lower shaft 11L are spline-connected to each other, the upper shaft 11U and the lower shaft 11L can rotate around their axes integrally, and the upper shaft 11U can move in relation to the lower shaft 11L in the axial direction.

Further, the inner column 4 has a stopper 41 formed to project from an outer circumferential face of the column 4. The stopper 34a is inserted and fitted into the telescopic slot 34 so as to be movable therein in the longitudinal direction. The stopper 34a is also established so as to be fractured when a shear load exceeding a set value is applied to the stopper 41. Then, when performing the telescopic-position adjustment with the movement of the inner column 4 in the cylinder-axis direction, the telescopic-position adjustment range is defined with the movement of the stopper 41 in the telescopic slot 34.

The lock mechanism 5 comprises an operating lever 51a, an operating shaft 51, a stationary cam 52a and a rotational cam 52b. In connection, all of the operating shaft 51, an eccentric cam member 53, a rack plate 54 and a pinion 55 constitute an engagement mechanism 5b.

The operating shaft 51 having a shaft-shape penetrates through the tilt slots 24 of both hanging parts 22 and both clamp parts 32 of the outer column 3 along a vehicle width direction and is supported rotatably around an axis of the shaft. Additionally, a washer that engages with an outer face of the right-side hanging part 22R is fixed to one end of the operating shaft 51 (on one-end side) by a nut, through a thrust bearing. On the other end of the operating shaft 51 (on another-end side), a cam mechanism 5a and the operating lever 51a are disposed between a head part provided integrally with the operating shaft 51 and an outer face of the left-side hanging part 22L. Then, the cam mechanism 5a on the operating shaft 51, which is positioned between the operating lever 51a and the left-side hanging part 22L, is composed of the stationary cam 52a and the rotational cam 52b. Also, between both clamp parts 32 on the operating shaft 51, the eccentric cam member 53 is arranged so as to be rotatable integrally with the operating shaft 51.

The stationary cam 52a is formed with a wide circular shape. The operating shaft 51 is arranged so as to penetrate through the center of the wide circular shape. The stationary cam 52a is arranged so that its stationary cam face faces the side of the operating lever 51a. With the back side of the stationary cam face fitted into the tilt slot 24, additionally, the stationary cam 52 is arranged so as not to rotate around the operating shaft 51. Instead, the same cam 52 is arranged so as to be movable in the tilt slot 24 vertically. On the stationary cam face, crest parts and trough parts are formed in the circumferential direction alternately.

The rotational cam 52b is formed with a wide circular shape. The operating shaft 51 is also arranged so as to penetrate through the center of the wide circular shape. The rotational cam 52b is arranged so that its rotational cam face faces the stationary cam face of the stationary cam 52a. The rotational cam 52b is joined to the operating lever 51a so as to be rotatable integrally with the lever 51a. Additionally, the rotational cam 52b is assembled to the operating shaft 51 so as to rotate around the operating shaft 51. On the rotational cam face, crest parts and trough parts are formed in the circumferential direction alternately.

A rack plate 54 comprises a strip-shaped plate material circularly which is curved in the vehicle width direction. The rack plate 54 is arranged on the outer circumferential face of the inner column 4 along the cylinder-axis direction. Additionally, the rack plate 54 has rack teeth 54a formed in the longitudinal direction successively.

The eccentric cam member 53 has a center hole 53b through which the operating shaft 51 is to penetrate and an outer circumferential face 53a of which the rotational center is deviated from the center of the center hole 53b and which constitutes an eccentric cam 53a having its outer circumferential face varying in the radial direction. Since the operating shaft 51 is inserted and fitted into the center hole 53b, the eccentric cam member 53 is serration-engaged with the operating shaft 51 so as to rotate together with the shaft 51 around its axis. The pinion 55 is arranged on the outer circumference of the eccentric cam 53a.

On the outer circumference of the eccentric cam 53a, the pinion 55 is arranged so as to be rotatable to the eccentric cam member 53, around the eccentric cam member 53 serving as a rotary shaft. With the operating shaft 51 operated to rotate to the fastening direction, the pinion 55 is pressed against the rack plate 54 by the eccentric cam 53a and thus engaged with the rack teeth 54a. Then, when the rack plate 54 moves forward in the cylinder-axis direction under condition that the pinion 54 is engaged with the rack teeth 54a, the pinion 54 rotates about the eccentric cam member 53 while being engaged with the rack teeth 54a of the rack plate 54.

The impact absorbing mechanism 6 comprises the engagement mechanism 5b, winding parts 61 and impact absorbing wires 62.

The winding parts 61 have cylindrical shapes allowing an insertion of the eccentric cam member 53 thereinto and are arranged on both sides of the pinion 55 on the eccentric cam member 53 so as to extend from with the pinion 55 integrally.

The impact absorbing wires 62 comprise one pair of wire materials. Also, the impact absorbing wires 62 have respective one ends fixed to the winding parts 61. While being wound around the winding parts 61, the other ends of the impact absorbing wires 62 are routed so as to extend, along both side edges of the rack plate 54, from the front toward the back in the cylinder-axis direction. Then, when the impact absorbing wires 62 are wound to the winding parts 61 rotating together with the pinion 55, the impact absorbing mechanism 6 absorbs impact energy due to bending deformation of the wires 62.

Next, the assembling sequence of the steering column device 1 of this embodiment will be described.

First, it is carried out to insert the inner column 4 into the cylinder of the outer column 3 while inserting the rack plate 54 of the inner column 4 into the slit 31 of the outer column 3.

Subsequently, it is carried out to dispose the outer column 3 between the hanging parts 22 of the attachment bracket 2. Using a suspension spring 14, it is then performed to allow the attachment bracket 2 to suspend the outer column 3 while allowing the pivot part 23 of the attachment bracket 2 to support the pivot receiving part 30 of the outer column 3.

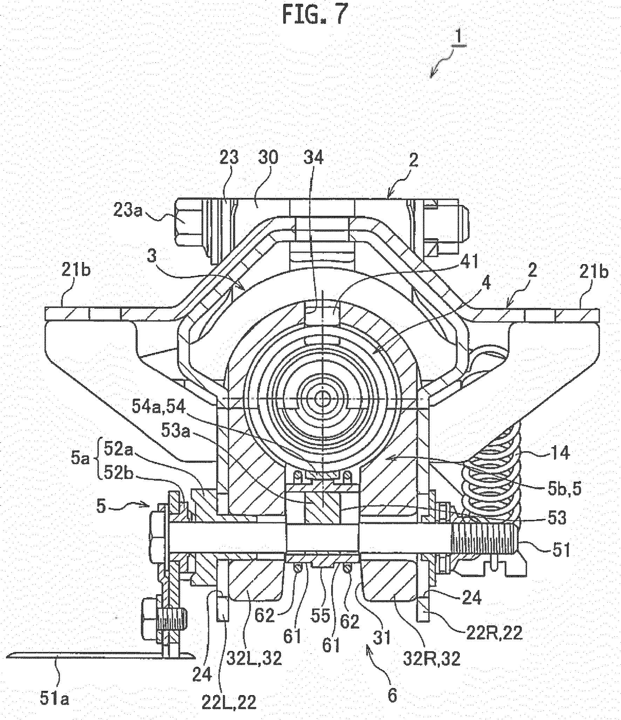

Next, it is performed to assemble the pinion 55 and the winding parts 61 to the eccentric cam member 53 and subsequently wind the impact absorbing wires 62 around the winding parts 61 while fixing respective ends of the wires 62 to the parts 61. Then, under condition of arranging an assembly, which is composed of the eccentric cam member 53, the pinion 55, the winding parts 61 and the impact absorbing wires 62, between the clamp parts 32, it is performed to assemble the operating shaft 51 to the attachment bracket 2 and the outer column 3 while allowing the operating shaft 51 to penetrate through the eccentric cam member 53. The operating shaft 51 penetrates through the operating lever 51 a, the rotational cam 52b, the stationary cam 52a, the tilt slot 24 of the left-side hanging part 22L, the left-side clamp part 32L, the eccentric cam member 53, the right-side clamp part 32R and the tilt slot 24 of the right-side hanging part 22R, in this order from the left side in Fig. 7. Outside the right-side hanging part 22R, additionally, the operating shaft 51 is inserted into the washer and the thrust bearing and finally engaged with the nut.

Then, the impact absorbing wires 62 are wound around the winding parts 61 and folded back. Thus, respective parallel portions of the wires 62 are routed backward through a gap between the winding parts 61 and the inner column 4. Next, with the lower shaft 11L spline-connected to the upper shaft 11U, it is inserted into the outer column 3 from the front side and successively, the lower shaft 11L is supported by the outer bearing 12 so as to be rotatable in the cylindrical outer column 3. Subsequently, the upper shaft 11U is supported by the inner bearing 13 so as to be rotatable in the cylindrical inner column 4.

Next, the operating sequence of the steering column device 1 of this embodiment will be described.

In order to fix the inner column 4 in a desired position, it is performed to move the inner column 4 in the tilt direction (vehicle vertical direction) and in the telescopic direction (vehicle longitudinal direction), thereby swinging the operating lever 51a upwardly. By operating to swing the operating lever 51a upwardly, the operating shaft 51 is rotated about its axis in the fastening direction.

As the rotational cam 52b integrated with the operating lever 51a is rotated in the fastening direction together with the operating shaft 51, the crest parts of the stationary cam 52a and the crest parts of the rotational cam 52b overlaps each other to increase the axial dimension of the cam mechanism 5a. Consequently, the operating shaft 51 is pulled toward the cam mechanism 5a, so that the hanging parts 22 and the clamp parts 32 are brought into pressure contact with each other and additionally, the outer column 3 is maintained in an arbitrary tilt position. Simultaneously, with the distance between the pair of clamp parts 32 narrowed, the diameter of the outer column 3 is reduced, so that the inner column 4 is maintained in an arbitrary telescopic position.

Additionally, with the rotation of the operating shaft 51 in the fastening direction, the eccentric cam member 53 rotates to cause the pinion 55 to be pressed against the rack plate 54 and engaged with the rack teeth 54a.

In order to adjust the position of the inner column 4, the fastening state between the inner column 4 and the outer column 3 is cancelled. For this purpose, it is first performed to swing the operating lever 51 a downward (i.e. in the canceling direction). By operating to swing the operating lever 51a downward, the operating shaft 51 rotates about its axis in the direction to cancel the fastening state.

As the rotational cam 52b integrated with the operating lever 51a is rotated in the direction to cancel the fastening state together with the operating shaft 51, the crest parts of the stationary cam 52a and the trough parts of the rotational cam 52b overlaps each other to reduce the axial dimension of the cam mechanism 5a. Consequently, the operating shaft 51 is loosened so as to cancel the pressure contact between the hanging parts 22 and the clamp parts 32, so that the outer column 3 becomes possible to move to the attachment bracket 2 in the tilt direction (vehicle vertical direction). Then, with an expansion of the distance between the pair of clamp parts 32, the diameter of the outer column 3 is enlarged, so that the inner column 4 becomes possible to move in the telescopic direction (vehicle longitudinal direction).

Further, with the rotation of the operating shaft 51 in the direction to cancel the fastening state, the eccentric cam member 53 rotates to cause the pinion 55 to be separated from the rack teeth 54a, thereby cancelling the locking state.

If an impact load exceeding a set value is applied to the inner column 4 under condition that the inner column 4 is locked to the outer column 3 by operating to fasten the operating lever 51a, the rack plate 54 moves forward in the cylinder-axis direction together with the inner column 4. Then, the pinion 55 in engagement with the rack teeth 54a on the rack plate 54 rotates about the eccentric cam 53a, so that the impact absorbing wires 62 are wound up by the winding parts 61. During this winding, the impact energy is absorbed since the impact absorbing wires 62 are subjected to bending deformation.

According to the above-mentioned embodiment, since the impact absorbing wire 62 made from a wire material is adopted as the impact absorbing member and additionally, the absorption of impact energy is accomplished by the pinion 55 winding the impact absorbing wires 62, it is possible to make the impact absorbing mechanism 6 smaller. Thus, the impact energy can be absorbed without enlarging the whole device.

Owing to the provision of the telescopic slot 34 and the stopper 41, it is possible to perform not only the positional adjustment of the inner column 4 within the telescopic-position adjustment range in normal time but also the absorption of impact energy since a breakage of the stopper 41 at the time of absorbing an impact allows the inner column 4 to move to a vehicle front side over the telescopic-position adjustment range.

In the steering column device 1 of this embodiment, the outer column 3 is provided with the telescopic slot 34, while the inner column 4 is provided with the stopper 41. Nevertheless, even when the inner column 4 is provided with the telescopic slot 34 while the outer column 3 is provided with the stopper 41, similar effects to those of this embodiment could be obtained.

## Claims

1. A steering column device comprising:
an outer column (3) having a cylindrical shape and arranged along a vehicle longitudinal direction;
a slit (31) formed to penetrate through a cylindrical wall of the outer column (3) along a cylinder-axis direction of the outer column (3);
a pair of clamp parts (32) arranged on both edge parts of the slit (31) along the cylinder-axis direction;
an inner column (4) having a cylindrical shape and inserted into the outer column (3) so as to be movable in a cylinder-axis direction of the inner column (4);
an operating shaft (51) having a shaft-shape and arranged so as to penetrate through the pair of clamp parts (32);
a lock mechanism (5) configured to narrow a distance between the pair of clamp parts (32) by rotating an operating lever (51a) arranged on the operating shaft (51) about an axis of the operating shaft (51) in a fastening direction, thereby fastening the inner column (4) to the outer column (3);
an engagement mechanism (5b) including:
an eccentric cam member (53) arranged on the operating shaft so as to be rotatable about the axis together with the operating shaft, the eccentric cam member provided, on its outer circumferential face, with an eccentric cam (53a);
a pinion (55) arranged on the outer circumference of the eccentric cam (53a) so as to be rotatable about the eccentric cam member (53) as an axis of rotation; and
rack teeth (54a) formed on the outer circumferential face of the inner column (4) along the cylinder-axis direction, the rack teeth (54a) continuing in the cylinder-axis direction so as to engage with the pinion (55), wherein
the engagement mechanism (5b) is configured so that the rotating of the operating shaft (51) in the fastening direction allows the eccentric cam (53a) to engage the pinion (55) with the rack teeth (54a) under pressure; and
an impact absorbing mechanism (6) including:
a winding part (61) arranged on each side of the pinion (55) and rotatably supported by the operating shaft (51) so as to be rotatable integrally with the pinion (55); and
an impact absorbing member (62) having a wire material, the impact absorbing member (62) having one end fixed to the winding part (61) and the other end routed along the inner column (4) while being wound around the winding part (61),
wherein the impact absorbing mechanism (6) is configured so that, when a load exceeding a set value is applied to the inner column (4) in the cylinder-axis direction, the rack teeth (54a) moves forward in the cylinder-axis direction together with the inner column (4) to cause the pinion (55) in engagement with the rack teeth (54a) to rotate about the eccentric cam member (53) and also cause the winding part (61) to wind the impact absorbing member (62), thereby absorbing impact energy.

2. The steering column device of claim 1 wherein
one of the outer column (3) and the inner column (4) is provided with a telescopic slot (34) extending along the cylinder-axis direction while penetrating through a cylindrical wall of the column (3 or 4), and
the other of the outer column (3) and the inner column (4) is provided with a stopper (41) which is inserted and fitted to the telescopic slot (34) movably in a longitudinal direction of the telescopic slot (34) and which is established so as to be fractured when a shear load exceeding a set value is applied to the stopper (41).
